(19) **Europäisches Patentamt**
**European Patent Office**
**Office européen des brevets**

(11) Veröffentlichungsnummer : **0 094 697**
**B1**

(12) **EUROPÄISCHE PATENTSCHRIFT**

(45) Veröffentlichungstag der Patentschrift :
22.01.86

(21) Anmeldenummer : **83200491.5**

(22) Anmeldetag : **07.04.83**

(51) Int. Cl.⁴ : **H 02 H   7/28**

(54) Verfahren zur Begrenzung der Ausschaltströme von Leistungsschaltern in einer Hochspannungsschaltanlage und Verwendung des Verfahrens.

(30) Priorität : **18.05.82 CH 3080/82**

(43) Veröffentlichungstag der Anmeldung :
**23.11.83 Patentblatt 83/47**

(45) Bekanntmachung des Hinweises auf die Patenterteilung : **22.01.86 Patentblatt 86/04**

(84) Benannte Vertragsstaaten :
**AT BE CH DE FR GB IT LI LU NL SE**

(56) Entgegenhaltungen :
**CH-A-   210 280**
**DE-A- 2 925 109**

(73) Patentinhaber : **BBC Aktiengesellschaft Brown, Boveri & Cie.**
**Haselstrasse**
**CH-5401 Baden (CH)**

(72) Erfinder : **Blahous, Leopold, Dr.**
**Lindenhof 8**
**CH-5430 Wettingen (CH)**
Erfinder : **Köppi, Georg**
**Waldmatt 14**
**CH-5242 Birr (CH)**

## Beschreibung

Die Erfindung betrifft ein Verfahren zur Begrenzung der Ausschaltströme von Leistungsschaltern in einer Hochspannungsschaltanlage beim Trennen eines kurzschlussbehafteten Teils von einem intakten Teil der Hochspannungsschaltanlage und eine Verwendung des Verfahrens.

Ein derartiges Verfahren ist bereits aus dem Buch H. Happoldt/D. Oeding : « Elektrische Kraftwerke und Netze », Springer-Verlag 1978, S. 450-454 bekannt. Bei diesem Verfahren ist zwischen zwei Sammelschienen ein Schalter vorgesehen, welcher die Sammelschienen bei Auftreten eines Kurzschlusses in einem mit einer der beiden Sammelschienen verbundenen Netzteil schnell abkuppelt. Hierdurch wird erreicht, dass ein zwischen dem kurzschlussbehafteten Netzteil und der damit verbundenen Sammelschiene angeordneter Schalter lediglich Kurzschlussströme abschalten muss, welche unmittelbar in die dem kurzschlussbehafteten Netzteil zugeordnete Sammelschiene eingespeist werden. Versagt jedoch der von einem hohen Kurzschlussstrom durchflossene und zwischen den beiden Sammelschienen angeordnete Kuppelschalter, so muss der zwischen dem fehlerbehafteten Netzteil und der zugeordneten Sammelschiene befindliche Leistungsschalter den vollen Kurzschlussstrom ausschalten. Daher muss dieser Schalter auf die volle Kurzschlussausschaltleistung dimensioniert werden. Darüber hinaus ist die Zuordnung der einspeisenden Leitungen auf die einzelnen Sammelschienen nicht frei wählbar, da der Kuppelschalter ja im Kurzschlussfall einen substantiellen Anteil (ca. 50 %) des Kurzschlussstromes übernehmen und wegschalten soll.

Aus der DE-A-2 925 109 ist ein Doppelsammelschienen-System bekannt, bei dem die beiden Sammelschienen über Lastschalter miteinander gekoppelt sind, welche jeweils zwischen zwei Abzweigen angeordnet sind. Ein erster beider Abzweige ist über einen ersten Leistungsschalter an eine erste beider Sammelschienen angeschlossen, ein zweiter beider Abzweige über einen zweiten Leistungsschalter an eine zweite beider Sammelschienen. Tritt bei diesem System an einem der Abzweige ein Kurzschluss auf, so wird ein Kurzschlussstrom durch Betätigung des dem fehlerbehafteten Abzweig zugeordneten Lastschalters in Nebenkreise kommutiert, welche jeweils einen der übrigen Lastschalter enthalten. Danach kann dann durch Betätigung des zwischen dem fehlerbehafteten Abzweig und der zugeordneten Sammelschiene befindlichen Leistungsschalters der Kurzschlussstrom abgeschaltet werden. Auch bei dieser Anlage muss der dem fehlerbehafteten Abzweig zugeordnete Leistungsschalter auf die volle Kurzschlussabschaltleistung dimensioniert sein.

Es ist daher Aufgabe der Erfindung ein Verfahren zur Begrenzung der Ausschaltströme von Leistungsschaltern in einer Hochspannungsschaltanlage anzugeben, welches es ermöglicht, die notwendige Ausschaltleistung der im Netz vorgesehenen Leistungsschalter erheblich zu reduzieren und gleichzeitig Hochspannungsschaltanlagen anzugeben, in denen dieses Verfahren besonders vorteilhaft zu verwenden ist.

Das zur Lösung dieser Aufgabe dienende Verfahren ist durch die kennzeichnenden Merkmale von Patentanspruch 1 definiert. Der Vorteil der Erfindung besteht insbesondere darin, dass es möglich ist, für Netze mit einem vorgegebenen maximalen Kurzschlussstrom kostengünstige Leistungsschalter mit einem wesentlich geringeren maximalen Ausschaltstrom als dem maximalen Kurzschlussstrom einzusetzen, oder Schalter, die aufgrund der wachsenden Kurzschlussleistung des Netzes ersetzt werden müssten, noch weiter in Betrieb zu halten.

Wird das erfindungsgemässe Verfahren gemäss den kennzeichnenden Merkmalen von Anspruch 2 weitergebildet, so können bei einem maximalen Kurzschlussstrom des Netzes von beispielsweise 80 kA besonders kostengünstige Leistungsschalter mit einem maximalen Ausschaltstrom von nur 50 kA eingesetzt werden.

Sehr empfehlenswert ist es, das erfindungsgemässe Verfahren in einer Hochspannungsschaltanlage gemäss Anspruch 3 zu verwenden, da es dadurch ermöglicht wird, selbst dann noch die vorstehend genannten Vorteile beizubehalten, wenn die ursprüngliche ringförmige Verbindung der Knotenpunkte des Netzes nicht mehr vorliegt, da beispielsweise eine Schaltstelle dieser ringförmigen Verbindung in Revision ist.

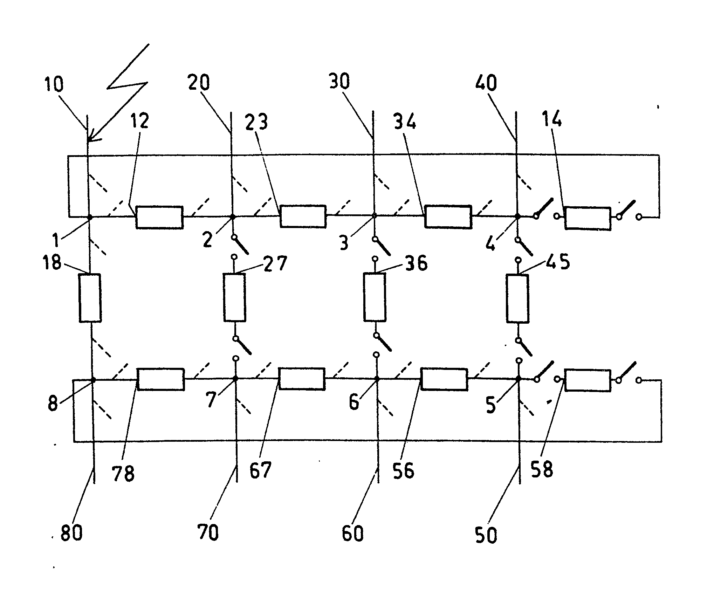

Nachfolgend wird ein Ausführungsbeispiel der Erfindung anhand der Zeichnung näher erläutert :

Hierbei zeigt die einzige Figur eine Schaltanlage eines Hochspannungsnetzes, in der die Ausschaltströme von Leistungsschaltern durch Anwendung des erfindungsgemässen Verfahrens begrenzt werden.

In der Figur sind Knotenpunkte 1, 2, ..., 8 dargestellt, welche über (nicht bezeichnete) Trennschalter mit Stromanschlüssen 10, 20, ..., 80 (nicht dargestellter) Netzteile wie z. B. Freileitungen, Kabel, Transformatoren, verbunden sind. Die Knotenpunkte 1 und 2, 2 und 3, 3 und 4, 4 und 5, 5 und 6, 6 und 7, 7 und 8, sowie 1 und 8 sind über Schaltstellen 12, 23, 34, 45, 56, 67, 78 und 18 verbindbar. Bei geschlossenen Schaltstellen 12, 23, ..., 18 sind die Knotenpunkte 1, 2, ..., 8 ringförmig miteinander verbunden und bilden einen Grundring. Ferner sind die Knotenpunkte 1 und 4, 2 und 7, 3 und 6 sowie 5 und 8 über weitere Schaltstellen 14, 27, 36 und 58 verbindbar. Jede Schaltstelle enthält einen Leistungssowie zwei Trennschalter, von denen jeder einerseits mit einer der Kontaktzuführungen des Leistungsschalters und andererseits mit einem der Knotenpunkte, zwischen denen die Schaltstelle liegt, verbunden ist. Alle Trennschalter sind in geöffnetem Zustand mit einer durchgezogenen Linie und in geschlossenem Zustand strichliert dargestellt. Die weiteren Schaltstellen 14, 27, 36 und 58 sind dazu vorgesehen, die Knotenpunkte 1, 2, ..., 8 auch dann in Form eines Ringes zu schalten, wenn der Grundring etwa wegen Revision einer der Schaltstellen 12, 23, 34, 45, 56, 67, 78 und 18 nicht mehr beibehalten werden kann. Die Knotenpunkte der vorstehend beschriebenen Schaltanlage sind in Ring-Kreuz-Form angeordnet. Es können mit Vorteil aber auch andere ein- oder mehrfach redundante Schaltanlagen, wie etwa die im EP-A2-0075967 (Art 54 (3) EPÜ) beschriebenen, verwendet werden.

Im ungestörten Betrieb eines solchen Hochspannungsnetzes sind die Trenner aller Stromanschlüsse 10, 20, ..., 80 sowie alle im Grundring angeordneten Schaltstellen 12, 23, 34, 45, 56, 67, 78 und 18 geschlossen. Tritt nun an einem der Stromanschlüsse 10, 20, ..., 80 ein Kurzschluss auf, so werden durch die verbleibenden Stromanschlüsse Teilkurzschlussströme in den Grundring eingespeist. Im Ausführungsbeispiel gemäss der Figur tritt der Kurzschluss am Stromanschluss 10 auf. Die verbleibenden Stromanschlüsse 20, ..., 80 speisen Teilkurzschlussströme ein, welche sich nach dem Kirchhoffschen Gesetz zu dem über den Stromanschluss 10 abgeführten Kurzschlussstrom addieren. Die Grösse der Teilkurzschlussströme in den einzelnen Anschlüssen 20, ..., 80 hängt hierbei von der Beschaffenheit des mit dem betreffenden Stromanschluss verbundenen Netzteils ab.

Die Grössen der Teilkurzschlussströme können im allgemeinen als fester Wert vorgegeben werden, können aber auch durch eine fortlaufende Ueberwachung der Stromanschlüsse 10, ..., 80 ermittelt werden.

Wird nun beispielsweise festgestellt, dass über die Anschlüsse 10, ..., 80 die nachfolgend aufgelisteten Teilkurzschlussströme zugeführt werden, nämlich

| Anschluss | Teilkurzschlussstrom in % des totalen Kurzschlussstromes der gesamten Hochspannungsschaltanlage |
|-----------|------------------------------------------------------------------------------------------------|
| 10 | 20 |
| 20 | 5 |
| 30 | 25 |
| 40 | 10 |
| 50 | 5 |
| 60 | 10 |
| 70 | 20 |
| 80 | 5 |

so besteht ein wesentlicher Schritt des erfindungsgemässen Verfahrens darin, bei einem Kurzschluss am Stromanschluss 10 — wie in der Figur dargestellt ist — die Schaltstelle 45 zu öffnen, da dann der über den Stromanschluss 10 abfliessende Kurzschlussstrom zu je 50 % auf die Schaltstellen 12 und 18 aufgeteilt wird, und die danach betätigten Schaltstellen 12 und 18 jeweils nur noch 50 % des Kurzschlussstromes zu schalten haben. Der Schalter 45 wird hierbei kaum beansprucht, da er nur einen verhältnismässig geringen Kurzschlußstrom schalten muß.

Sollte der Schalter 45 nicht öffnen, so kann der Schalter 56 ausgelöst werden. Hierdurch wird eine Stromteilung im Verhältnis 45/35 bewirkt, was die Schaltstellen 12 und 18 also ebenfalls mit annähernd gleich grossen und gegenüber dem totalen Kurzschlussstrom der gesamten Anlage wesentlich reduzierten Ausschaltströmen belastet. Dies stellt beim Bau einer Hochspannungsschaltanlage einen ganz erheblichen Vorteil dar, da bei einer Bemessung dieser Anlage auf einen vorgegebenen Kurzschlussstromwert die Leistungsschalter und die ihnen zugeordneten Geräte und Verbindungsleitungen stets auf kleinere Werte als dem vorgegebenen Kurzschlussstromwert zu dimensionieren sind. Bei einer Hochspannungsschaltanlage, bei der die Knotenpunkte über Schaltstellen im Ring verbunden sind (Anzahl der Knotenpunkte n > 3) und dieser Ring von einer Schaltstelle so aufgetrennt werden kann, dass auf die Kurzschlussstelle von beiden Seiten jeweils etwa die Hälfte des totalen Kurzschlussstromes der gesamten Anlage zufliesst, lassen sich die Schaltstellen für maximale Ausschaltstromwerte bemessen, welche nur wenig grösser als die Hälfte des vorgegebenen Kurzschlussstromwertes der Hochspannungsschaltanlage sind.

Eine Schnellwiedereinschaltung wird von einer der beiden Schaltstellen 12 und 18 durchgeführt. Ist die Schnellwiedereinschaltung erfolgreich, so schliesst auch die zweite Schaltstelle und schliesslich die Schaltstelle 45.

Zur Durchführung des erfindungsgemässen Verfahrens kann eine zentrale Ueberwachungs- und Steuereinheit eingesetzt werden, in welcher die etwa durch Stromwandler ermittelten Werte der Teilkurzschlussströme eingegeben und verarbeitet werden, und von der die Auslösebefehle an die einzelnen Schaltstellen ausgehen. In dieser zentralen Ueberwachungs- und Steuereinheit kann zusätzlich auch die Information gespeichert werden, einen neuen Ring zu bilden, wenn es sich herausstellt, dass im Grundring eine Schaltstelle — etwa wegen einer Revision — nicht mehr verfügbar ist. Ist z. B. die Schaltstelle 23 ausgefallen, so kann durch Schliessen der Schaltstellen 14, 27, 36 und 58 und Öffnen der Schaltstellen 18, 67 und 45 mit allen Knotenpunkten 1, 2, ..., 8 ein neuer Ring gebildet werden.

## Patentansprüche

1. Verfahren zur Begrenzung der Ausschaltströme von Leistungsschaltern in einer Hochspannungsschaltanlage beim Trennen eines kurzschlussbehafteten Teils von einem verfügbaren Teil der Hochspannungsschaltanlage durch Öffnen einer einen Leistungsschalter enthaltenden Schaltstelle, dadurch gekennzeichnet, dass bei einer Hochspannungsschaltanlage mit über geschlossene Schaltstellen (z. B. 12, 23, 34, 45, 56, 67, 78, 18) zu einem Ring verbindbaren Knotenpunkten (1, 2, ..., 8) nach Auftreten eines Kurzschlusses an einem Knotenpunkt (z. B. 1) zuerst eine Schaltstelle (z. B. 45) des Ringes geöffnet wird, zwischen deren beiden Kontaktzuführungen und dem kurzschlussbehafteten Knotenpunkt (z. B. 1) jeweils mindestens ein intakter Knotenpunkt (z. B. 2, 3, 4 bzw. 5, 6, 7, 8) vorgesehen ist, über den ein Teilkurzschlussstrom in den Ring eingespeist wird.

2. Verfahren nach Anspruch 1, dadurch gekennzeichnet, dass die Werte der über die intakten Knotenpunkte (z. B. 2, ..., 8) in den Ring eingespeisten Teilkurzschlussströme ermittelt werden, und danach zuerst diejenige Schaltstelle (z. B. 45) geöffnet wird, zwischen deren Kontaktzuführungen und dem kurzschlussbehafteten Knotenpunkt (z. B. 1) eine Stromteilung des eingespeisten Kurzschlußstromes im Verhältnis zwischen 1/1 und 45/35 bewirkt wird.

3. Verwendung des Verfahrens nach einem der Ansprüche 1 oder 2 in einer Hochspannungsschaltanlage deren Knotenpunkte (1, 2, ..., 8) derart miteinander über Schaltstellen (12, 23, ..., 78, 18, 14, ..., 58) verbunden sind, dass bei Nichtverfügbarkeit einer dieser Schaltstellen (z. B. 23) wieder eine Ring- oder zumindest Teilringanordnung der Knotenpunkte (1, 2, ..., 8) herstellbar ist (ein- oder mehrfach redundante Ringanordnung).

## Claims

1. Method for limiting the breaking currents of circuit breakers in a high-voltage switching system when isolating a short-circuited section of an available section of the high-voltage switching system by opening a switching point containing a circuit breaker, characterised in that in a high-voltage switching system containing nodes (1, 2, ..., 8) which can be connected to form a ring via closed switching points (for example 12, 23, 34, 45, 56, 67, 78, 18), after the occurrence of a short circuit at a node (for example 1), first a switching point (for example 45) of the ring is opened, between the two contact feeds of which and the short-circuited node (for example 1) in each case at least one unaffected node (for example 2, 3, 4 and 5, 6, 7, 8) is provided via which a partial short-circuit current is fed into the ring.

2. Method according to Claim 1, characterised in that the values of the partial short-circuit currents fed via the unaffected nodes (for example 2, ..., 8) into the ring are determined and subsequently that switching point (for example 45) is first opened between the contact feeds of which and the short-circuited node (for example 1). The short-circuit current fed in is divided at a ratio of between 1/1 and 45/35.

3. Application of the method according to one of Claims 1 or 2 in a high-voltage switching system, the nodes (1, 2, ..., 8) of which are connected to each other via switching points (12, 23, ..., 78, 18 ; 14, ..., 58) in such a manner that, if one of these switching points (for example 23) is not available, a ring or at least part-ring arrangement of the nodes (1, 2, ..., 8) can again be produced (ring arrangement with single or multiple redundancy).

## Revendications

1. Procédé pour limiter les courants de coupure d'interrupteurs de puissance dans une installation de commutation à haute tension lors de la séparation d'une partie présentant un court-circuit et d'une partie disponible de l'installation de commutation à haute tension par l'ouverture d'un endroit de commutation comprenant un interrupteur de puissance, caractérisé en ce que, dans le cas d'une installation de commutation à haute tension présentant des points nodaux (1, 2, ..., 8) pouvant être connectés en boucle par l'intermédiaire d'endroits de commutation fermés (par exemple 12, 23, 34, 45, 56, 67, 78, 18), après apparition d'un court-circuit à un point nodal (par exemple 1), un endroit de commutation (par exemple 45) de la boucle est tout d'abord ouvert, étant entendu qu'entre les deux bornes de contact de cet endroit de commutation et le point nodal présentant le court-circuit (par exemple 1) est chaque fois prévu au moins un point nodal intact (par exemple 2, 3, 4 ou 5, 6, 7, 8) par l'intermédiaire duquel un courant de court-circuit partiel est introduit dans la boucle.

2. Procédé suivant la revendication 1, caractérisé en ce que les valeurs des courants de court-circuit partiels introduits dans la boucle par l'intermédiaire des points nodaux intacts (par exemple 2, ..., 8) sont déterminées, après quoi est ouvert tout d'abord l'endroit de commutation (par exemple 45) entre les bornes de contact duquel et le point nodal présentant le court-circuit (par exemple 1) est obtenue une division du courant de court-circuit introduit selon un rapport compris entre 1 : 1 et 45 : 35.

3. Utilisation du procédé suivant la revendication 1 ou 2 une installation de commutation à haute tension dont les points nodaux (1, 2, ..., 8) sont connectés l'un à l'autre par l'intermédiaire d'endroits de commutation (12, 23, ..., 78, 18, 14, ..., 58) de telle manière que, dans le cas de la non-disponibilité de l'un de ces endroits de commutation (par exemple 23), une disposition en boucle ou au moins en boucle partielle des points nodaux (1, 2, ..., 8) peut à nouveau être réalisée (disposition en boucle à redondance simple ou multiple).